# EUROPÄISCHE PATENTSCHRIFT

(11) **EP 4 060 440 B1**
(45) Veröffentlichungstag und Bekanntmachung des Hinweises auf die Patenterteilung: **26.07.2023**
(21) Anmeldenummer: 22150356.8
(22) Anmeldetag: 05.01.2022
(51) Int. Cl.: G05B 19/418

(54) **SYSTEM MIT MINDESTENS EINEM ANLAGESYSTEM MIT MINDESTENS MEHREREN ANLAGETEILEN**
SYSTEM WITH AT LEAST ONE INSTALLATION SYSTEM WITH AT LEAST SEVERAL PARTS
SYSTÈME POURVU D'AU MOINS UN SYSTÈME D'INSTALLATION POURVU D'AU MOINS PLUSIEURS ÉLÉMENTS D'INSTALLATION

(30) Priorität: 18.03.2021 DE 102021106584
(43) Veröffentlichungstag der Anmeldung: 21.09.2022
(73) Patentinhaber: SICK AG, 79183 Waldkirch (DE)
(72) Erfinder: Ams, Mathias, 79211 Denzlingen (DE)

(56) Entgegenhaltungen:
- Motsch Et Al.: "Safety-Anforderungen an die digitale Maschinenrepräsentanz 2020 Whitepaper SF-3.3", Internet, 1. September 2020 (2020-09-01), XP55925028, Gefunden im Internet: URL:https://smartfactory.de/wp-content/upl oads/2020/09/SF_WhitePaper-082020_DE_WEB.p df [gefunden am 2022-05-25]
- Anonymous: "Verwaltungsschale in der Praxis", Bundesministerium Für Wirtschaft Und Energie (BMWi), 1. Juli 2020 (2020-07-01), Seiten 1-82, XP055884251, Gefunden im Internet: URL:https://www.plattform-i40.de/IP/Redakt ion/DE/Downloads/Publikation/2020-verwaltu ngsschale-in-der-praxis.pdf?__blob=publica tionFile&v=3 [gefunden am 2022-01-27]

## Beschreibung

Die vorliegende Erfindung betrifft ein System mit mindestens einem Anlagesystem mit mindestens mehreren Anlagenteilen, mit mindestens mehreren autonomen mobilen Robotern, beweglichen Maschinen und mehreren Sensoren zur Generierung von Daten zur Verwendung zur sicherheitsgerichteten Absicherung des Anlagesystems, wobei zugehörig zu dem Anlagensystem ein lokales Anlagensicherheitssystem vorhanden ist.

### Zur Situationsbeschreibung zum Einzug von Industrie 4.0 und zum Umbruch in der Fertigung und Logistik:

In der heutigen Welt der Fabrik- und Logistikautomation wird ein immer höherer Grad des automatisierten und flexiblen Maschinen-, Material-, Waren- und Teiletransports angestrebt. Dies wird durch AGVs (Automated Guided Vehicles, autonom geführte Fahrzeuge), AGCs (Automated Guided Carts, Autonom geführte Kleinfahrzeuge) und autonome mobile Roboter (AMRs, Autonomous Mobile Robots) realisiert. Im Weiteren werden diese als autonome mobile Roboter bezeichnet. Anlagenteile bzw. Agents sind beispielsweise weitere Maschinen bzw. Maschinenteile, beispielsweise auch mobile, welche weitere Elements solcher Automatisierungskonzepte bzw. Anlagesysteme darstellen.

Speziell im Bereich der Fabrikautomation wird im Rahmen von Industrie 4.0 die Herstellung von kleinen Serien, insbesondere eine Losgröße von Eins angestrebt, was ein flexibles Produktionskonzept voraussetzt. Um ein solches, flexibles Produktionskonzept umsetzen zu können, ist es erforderlich innerhalb kürzester Zeit die Produktionsstätte auch Shop-Floor genannt, also die Organisation in einer Werkhalle und die intralogistischen Transportwege umstellen zu können.

In diesem Zusammenhang übernehmen autonome mobile Roboter die folgenden Aufgaben:
- Automatisierte Umrüstung und Umstrukturierung der Fertigung
- Dynamische Materiallager
- Autonomer Aufbau einer Intralogistikkette

Es erfolgt eine automatisierte Umrüstung und Umstrukturierung der Fertigung. Abhängig auf den eingehenden Aufträgen und deren Priorisierung kann über ein Warenwirtschaftssystem (Enterprice Resource Planning System, ERP) und über ein Fertigungssystem (Manufacturing Execution System, MES) die Fertigung umstrukturiert werden. Im Fertigungssystem sind unterschiedliche Fertigungsrezepte, d.h. Linienplanung und Maschinenrüstungen gespeichert.

In einer Automatisierungspyramide agiert zukünftig zwischen einem Fertigungssystem (Manufacturing Execution System, MES) und einem Überwachungs-, Steuerungs- und Datenerfassungssystem (Supervisory Control and Data acquisition system, SCADA) ein System, welches die Struktur der Fertigungslinien plant und die autonomen mobile Roboter mit Aufträgen versieht. Dieses System übernimmt im späteren Fertigungsbetrieb auch die Routen-Koordination der autonomen mobilen Roboter für den Materialfluss. Im Weiteren wird dieses System Anlagenlayout und Anlagenteile Koordinierungssystem (Plant Layout and Agent Coordination System, PLACS) genannt.

Das Anlagenlayout und Anlagenteile Koordinierungssystem (PLACS) sendet an die einzelnen autonomen mobilen Roboter und weiteren Anlagenteile Aufträge wie eine Linienstruktur aufzubauen ist. Diese Aufträge können beispielsweise folgende Daten enthalten:
- die Positionen an denen ein Linienelement (z. B. eine Maschine, Anlagenteil) abzuholen ist,
- die Position an der das Linienelement abzuladen ist,
- Informationen über die Ladung (Gewicht, Menge, Abmessungen, usw.),
- Max Werte für Geschwindigkeit und Beschleunigung,
- Identifikationsmerkmale des Linienelements.

Im Austausch mit den Anlagenteilen definiert das Anlagenlayout und Anlagenteile Koordinierungssystem dann die Fahrprofile der Anlagenteile oder der autonomen mobilen Roboter.

### Dynamische Materiallager:

Abhängig von dem Fertigungsauftrag und der Struktur der Fertigungslinie müssen an unterschiedlichen Fertigungssegmenten auch unterschiedlich große Kapazitäten für die Zwischenlagerung von Material, Halbfertigungszeugnissen usw. angelegt werden. Das Anlagenlayout und Anlagenteile Koordinierungssystem legt diese dynamisch an, d.h. diese Lagerplätze sind nicht starr und sie können sich in Position und Größe ändern.

### Autonomer Aufbau der Intralogistikkette:

Nach dem die Fertigungslinie neu strukturiert ist, werden vom Anlagenlayout und Anlagenteile Koordinierungssystem an die autonomen mobile Roboter Lieferaufträge gesendet. Die autonomen mobilen Roboter stehen über ein Kommunikationsnetzwerk in ständigem Austausch mit dem Anlagenlayout und Anlagenteile Koordinierungssystem und anderen autonomen mobile Robotern. Somit sind jedem autonomen mobile Roboter Hindernisse, "Staus" usw. bekannt. In diesem Zusammenspiel sind die autonomen mobile Roboter in der Lage die kürzesten und am besten optimierten Routen zu berechnen und durchzuführen.

Diese Aufträge können beispielsweise folgende Daten enthalten:
- die Positionen an denen das Material abzuholen ist,
- die Positionen an der das Material abzuladen ist,
- Informationen über die Ladung (Gewicht, Menge, Abmessungen, usw.),
- Max Werte für Geschwindigkeit und Beschleunigung,
- Identifikationsmerkmale der Ladung.

Die oben beschriebene Art eine moderne Industrie 4.0-fähige Fertigung zu betreiben lässt sich in ähnlicher Weise auch auf Teile von Lagerlogistik und Logistikzentren übertragen.

Bereits heute sind moderne Fertigungs- und Logistikanlagen in der Lage solche Konzepte mindestens teilweise umzusetzen. Durch den Industrie 4.0 und dem Internet der Dinge (Internet of Things, loT) Ansatz, den Auf- und Ausbau moderne Kommunikationstechnologien (bspw. 5G), Ausbau der Speicher- und Servertechnologien, sowie zunehmende Nutzung von künstlicher Intelligenz (KI), werden solche Konzepte in der Industrie weiter voranschreiten.

### Problemstellung aus der Perspektive der funktionalen Sicherheitstechnik:

Die funktionale Sicherheitstechnik beruht auf dem Prinzip zu jeder Gefährdung die durch eine Anlage, Maschine oder dem "industriellen" Umfeld allgemein auftreten kann, das zugehörige Risiko bewerten zu können und dann geeignete Gegenmaßnahmen implementieren zu können. Da sowohl Betreiber, wie auch Hersteller von solchen Anlagen Haftungsverantwortung für den sicheren Betrieb übernehmen, ist final immer eine natürliche Person für die Beurteilung des Risikos und die Wirksamkeit der implementierten Maßnahmen verantwortlich.

Dies steht jedoch im Widerspruch zu den Anforderungen und Konzepten von Industrie 4.0, da nach jeder Änderung die das Anlagenlayout und Anlagenteile Koordinierungssystem an der Anlage vornimmt eine komplette neue Risikobewertung der Anlage, oder zumindest der geänderten Teile erforderlich wäre. Somit würde die funktionale Sicherheitstechnik diesen Fortschritt verhindern.

### Maschinenzentrierter Ansatz:

Klassische funktionale Sicherheit wird in solchen Anlagen erreicht, indem maschinenzentriert die Gefährdungen identifiziert werden, das Verletzungsrisiko analysiert wird und dann risikomindernde Maßnahmen implementiert werden. Ein autonom mobiler Roboter wird in diesem Ansatz so eingesetzt werden, dass beispielsweise mit Hilfe eine Sicherheitslaserscanners Kollisionsvermeidung realisiert wird. Der Scanner erkennt basierend von geschwindigkeitsabhängigen Schutzfeldern Objekte, als Reaktion wird die Geschwindigkeit bis zu Stillstand reduziert, bevor eine Kollision stattfindet. Dies stößt aber dort an Grenzen, wo das Objekt eine Interaktionsstelle (z. B. Materialübergabe, Akkuladestation, Engstelle, usw.) oder ähnliches ist, an der der autonom mobile Roboter heranfahren muss. Dort ist es dann erforderlich, die Position der Interaktionsstelle zu kennen und von der Primärsicherheitsfunktion Kollisionsvermeidung in eine adäquate Sekundärsicherheitsfunktion (bspw. Reduzierung von Geschwindigkeit und Kraft) umzuschalten.

Die Erkennung der Position kann gestützt durch Lokalisierungstechnologien (UWB-Funk, Funk, WLAN, Odometrie, lokal Merkmale, usw.) erfolgen.

Da die Position in einem sich ständig ändernden Umfeld aber nicht fix ist und sich ständig neue potentielle Gefahrenstellen ergeben können ist der aktuelle maschinenzentrierte Ansatz nicht geeignet um Industrie 4.0-Konzepte zu ermöglichen.

Der maschinenzentrierte Ansatz kann mit Veränderungen des Layouts der Anlage nicht in automatisierter Weise umgehen. Bei jeder Änderung muss mindestens der Teil der Änderung neu bewertet und validiert werden. Dies kann auch massive Einflüssen bei der Implementierung der funktionalen Sicherheitstechnik zur Folge haben. Dieser Ansatz ist für flexible Konzepte nicht geeignet.

### Anlagenzentrierter Ansatz mit Objektortung:

Im Gegensatz zum maschinenzentrierten Ansatz steht der anlagenzentrierte Ansatz. Hier wird davon ausgegangen, dass alle stationären Gefahrstellen bekannt sind und die Position aller beweglichen Objekte (AMR, Agenten und Menschen) ebenfalls unter Echtzeitbedingungen bekannt sind. Weiterhin wird davon ausgegangen, dass jedem Objekt basierend auf der Kenntnis der Automatisierungsaufgabe und der aktuellen Trajektorie eine Risikokennziffer zugeordnet werden kann.

Abhängig von Trajektorie und Risikokennziffer wird im System dann noch vor Auftreten einer Gefährdung eine angemessene risikomindemde Reaktion eingeleitet. Dies können beispielsweise alternative Routen, Reduzierung der Geschwindigkeit, usw. sein.

Der anlagenzentrierte Ansatz mit Objektortung kann mit flexiblen Anlagenkonzepten besser umgehen, hat jedoch Schwachstellen bei der Ermittlung der Risikokennzahl von Anlagenteilen und der flexiblen Umstrukturierung der Anlage durch Anlageteile und autonomen mobilen Robotern.

Bei der Bewertung der Risikokennzahl von Anlageteilen und autonomen mobilen Robotern ist es entscheidend Kenntnis über die physischen Eigenschaften der autonomen mobilen Roboter (Masse, Oberfläche, Abmaße, usw.) und deren Beladung zu haben. Nur unter Kenntnis dieser Eigenschaften kann zuverlässig eine Risikokennziffer ermittelt werden.

Nach der Umstrukturierung der Anlage können völlig neue Gefahrstellen entstehen, die so zuvor nicht existiert haben. Beispiele hierfür sind neue Engstellen die dadurch entstehen, dass Maschinen im Rahmen der neu entstandenen Struktur dichter beieinanderstehen. Oder das Material an neue Stellen zwischengelagert wird und hierdurch neue Gefährdungen entstehen. Die Bewertungen dieser neuen Gefährdungen wird im anlagenzentrierten Ansatz mit Objektortung nicht ausreichend berücksichtigt.

Insgesamt vernachlässigt die reine Objektortung die erforderlichen Mechanismen der Risikobewertung, Maßnahmenplanung und Validierung der Wirksamkeit der Maßnahmen, da bei der Betrachtung der Objekteigenschaften nicht betrachtet werden.

Die Veröffentlichung TECHNOLOGIE-INITIATIVE SMARTFACTORY KL e.V.: Safety-Anforderungen an die digitale Maschinenrepräsentanz 2020, WhitePaper SF 3.3 - 09/2020 befasst sich u. a. mit dem Thema Safety in modularen Industrie 4.0-Produktionsanlagen. Für das Ermöglichen der praktischen Umsetzung einer vereinfachten, teil-oder vollautomatisierten Maschinensicherheitsbewertung sind konkrete Anforderungen an die Safety-Inhalte der digitalen Repräsentanz einer Maschine zu stellen. Im Sinne von "Plug&Produce" und damit der einfachen Austauschbarkeit von Maschinenmodulen einer Produktionsanlage sollten die aus Safety-Sicht erforderlichen Inhalte einer digitalen Maschinenrepräsentanz standardisiert werden. Des Weiteren wurde das Erfordernis einer standardisierten Safety-Semantik erkannt. Diese beiden identifizierten Erfordernisse zur Standardisierung sind nicht nur für die Umsetzbarkeit von "Plug&Produce" erforderlich, sondern auch für die Realisierung von "dynamischer Maschinensicherheit", welche das Heben von zusätzlicher Effizienz und Produktivität ermöglicht.

Die Veröffentlichung des BUNDESMINISTERIUM FÜR WIRTSCHAFT UND ENERGIE (BMWi), Plattform Industrie 4.0: Diskussionspapier Verwaltungsschale in der Praxis, Stand Juli 2020 beschreibt eine Verwaltungsschale und physische Assets. Das physische Asset und die Verwaltungsschale zusammen bilden die I4.0-Komponente. Die Verwaltungsschale ist das digitale Abbild eines Gegenstands. Im Rahmen dieses Dokuments werden physische und virtuelle (z. B. Dokumente, Software) Assets betrachtet, die die Gegenstände der Verwaltungsschale sind. Die Verwaltungsschale stellt die Schnittstelle für I4.0-Kommunikation zur Verfügung.

Eine Aufgabe der Erfindung besteht darin, ein verbessertes System zur Sicherheit eines Anlagesystems bereitzustellen.

Die Aufgabe wird durch ein System gemäß Anspruch 1 gelöst.

Die Erfindung erlaubt es ein globales sicheres Abbild des Anlagesystems im Anlagensicherheitssystem zu erzeugen. Das System kombiniert hierzu das maschinenzentrierte Konzept mit dem anlagenzentrierten Konzept. Weiterhin definiert es Mechanismen zur automatisierten Risikobewertung und Maßnahmen-Planung, Implementierung und Validierung von dynamischer funktionaler Sicherheitstechnik in einer automatisierten flexiblen Anlage. Beispielsweise durch die Nutzung von Edge-Cloud-Computing, Sensordatenfusion, künstlicher Intelligenz und Services wird der Lösungsraum für dynamische funktionale Sicherheitstechnik ständig erweitert.

Mit Hilfe der Erfindung werden die folgenden Ziele erreicht:
- angemessene Sicherheit in einem Anlagensystem
- Maximierung der Produktivität
- selbstlernende funktionale Sicherheitstechnik

Gemäß der Erfindung gibt es ein öffentliches Anlagenbibliothekssystem (welches auch mit Safety Cloud ECO System, SCES bezeichnet wird). Der Betreiber dieser Anwendung, also dem Anlagenbibliothekssystem ist ein Unternehmen oder eine Nutzergruppe, welche sicherstellt, dass es zu ermittelten Gefährdungen auch passende Funktionen und Maßnahmen zur Risikominderung gibt. Hierzu verfügt das Anlagenbibliothekssystem über eine Bibliothek von Gefährdungen, Methoden, Funktionen, Algorithmen, Maßnahmen und Risikokennzahlen in der zweiten Datenbank.

Gestützt auf Expertenwissen sind in dem Anlagenbibliothekssystem zu den hinterlegten Gefährdungen auch immer zugeordnete Risikobewertungen und Maßnahmen und Funktionen abgelegt. Basierend auf diesem Expertenwissen wird für jede Gefährdung auch die Methode der Lösungsfindung, von der Gefährdung über das ermittelte Risiko bis hinzu zur Maßnahme und den notwendigen Algorithmen zur Risikominderung in der zweiten Datenbank hinterlegt.

Auf Anlagenebene gibt es das lokale Anlagensicherheitssystem (welches auch mit Plant Safety Control Cloud bezeichnet wird, PSCC), dieses repräsentiert alle in der Anlage auftretenden Gefährdungen mit den zugehörigen Maßnahmen und Sicherheitsfunktionen in einer ersten Datenbank.

Das Anlagenbibliothekssystem weist mindestens ein zweites Datenmodell mit mindestens Datensätzen für das Anlagensicherheitssystem auf. Dabei weist das Anlagenbibliothekssystem kein Abbild des Anlagensicherheitssystems auf, sondern eine Sammlung von Szenarien die auf das Anlagensicherheitssystem passen können und auf dem Anlagensicherungssystem ausgeführt werden können.

In Weiterbildung der Erfindung weist das Anlagensicherheitssystem eine Anbindung an ein Koordinierungssystem auf. Damit umfasst das System ein Koordinierungssystem. Das Anlagensicherheitssystem empfängt Daten einer geplanten Layout-Änderung vor einer Aktivierung bewertet diese in einer Simulation.

Das Anlagensicherheitssystem übernimmt selbst die Ausführung von Sicherheitsfunktionen. Hierzu verfügt es beispielsweise über entsprechende sicherheitsrelevante Architekturen. Beispielsweise redundante und/oder zweikanalige Strukturen und/oder Diagnosevorrichtungen bezüglich Technologien, Funktionsausführung, Kommunikation und Datenhaltung.

Nicht alle Sensoren haben exklusiv die Aufgabe der sicherheitsgerichteten Absicherung, sie liefern parallel zu Ihrer Automatisierungsaufgabe hierzu aber auch noch Daten.

Gemäß der Erfindung weisen die Datensätze mindestens jeweils eine Geometrie, eine Gefährdung, einen Sicherheitslevel, eine Position, eine Geschwindigkeit, eine Identifikation und eine Maßnahme auf.

Der Betreiber des Anlagenbibliothekssystems erweitert diese Bibliothek ständig.

### Erweiterung des Anlagenbibliothekssystems:

Es gibt grundsätzlich unterschiedliche Möglichkeiten wie die Bibliothek erweitert werden kann:
- Beiträge durch Anwendergruppen
- Beiträge durch den Betreiber der Anlagenbibliothekssystems Beiträge durch Anwendergruppen:

Der Betreiber der Anlagenbibliothekssystems und die Anwendergruppen des Anlagenbibliothekssystems organisieren die Anlagenbibliothekssystems beispielsweise als O-pen-Community-Ansatz, d.h. die Anwendergruppen haben eigenes Know-How in der funktionalen Sicherheitstechnik. Sie führen eigene Risikoanalysen durch und definieren die Methoden der Risikominderung und stelle die Ergebnisse in dem Anlagenbibliothekssystem zur Verfügung. Anwendergruppen können die Anlagenbibliothekssystems auch nutzen um dort Ihre Lösungen (Datensätze) gegen Lizenzen dritten zur Verfügung zu stellen.

### Beiträge durch den Betreiber des Anlagenbibliothekssystems:

Der Betreiber des Anlagenbibliothekssystems bietet den Service der Risikoanalyse, Definition von Risikominderungsmaßnahmen und deren Entwicklung als digitalen Service an. Bei jeder neuen Gefährdung wird ein neuer Datensatz generiert der danach als Element der Bibliothek zur Verfügung steht.

Gemäß der Erfindung ist das Anlagensicherheitssystem ausgebildet, eine Risikobewertung und eine Risikobeurteilung für das Anlagensystem zyklisch oder nach Feststellung einer Änderung durchzuführen und Entscheidungen über eine Notwendigkeit einer Risikominimierung zyklisch oder nach Feststellung einer Änderung zu treffen, wodurch das Anlagensicherheitssystem zur automatischen und dynamischen Erstellung einer Risikobeurteilung des Anlagensystems ausgebildet ist.

### Erfassung der Umgebung:

Basis für die Maßnahmen zur Risikominderung ist die Verfügbarkeit eines digitalen Zwillings des Anlagesystems als Abbildung in dem Anlagensicherheitssystem. Im Fokus des digitalen Zwillings stehen Bewegungsabläufe, Positionen und weitere Charakteristika die zu Gefährdungen für Menschen in dem Anlagensystem führen können. Hierzu werden einerseits alle erforderlichen Sensoren an das Anlagensicherheitssystem angebunden, um dort ihre Daten zu Generierung des digitalen Zwillings einspeisen zu können. Damit sich die Anlagengeometrie den Anforderungen des aktuellen Fertigungsauftrags anpassen kann muss das Abbild des Anlagensystems in dem Anlagensicherheitssystem ständig aktuell gehalten werden.

Gemäß der Erfindung sind Sensoren an den autonomen mobilen Robotern und an den Anlagenteilen angeordnet und die Sensoren erzeugen Sensordaten für das Anlagensicherheitssystem.

Autonome mobile Roboter, bewegliche Maschinen bzw. bewegliche Anlagenteile werden hierzu beispielsweise mit bildgebenden, positionsbestimmenden Sensoren und Identifikationssensoren ausgestattet um bei der Erfüllung der Automatisierungsaufgabe zur Laufzeit den digitalen Zwilling ständig aktuell zu halten. So liefern beispielsweise unterschiedliche autonome mobile Roboter ständig oder nach Anforderung des Anlagensicherheitssystems Position und entsprechende bildgebende Daten an das Anlagensicherheitssystem. Somit können diese Daten gegeneinander plausibilisiert werden, was zur Fehlersicherheit des digitalen Zwillings beträgt. Zur Optimierung der räumlichen Abbildung können diese Daten aus unterschiedlichen Quellen weiterhin auch fusioniert werden.

Zur Vermeidung von systematischen Fehlern können die autonomen mobilen Roboter auch mit unterschiedlichen Sensortechnologien ausgestattet werden.

In einigen Fällen kann es auch erforderlich sein, dass zusätzlich zu den autonomen mobilen Robotern die für die Automatisierungsaufgabe erforderlich sind auch Drohnen als autonomen mobilen Roboter zum Einsatz kommen. Dies kann der Fall sein, wenn Bildgebende Daten aus unterschiedlichen Perspektiven erforderlich sind, welche die autonomen mobilen Roboter nicht optimal liefern können. Weiterhin kann der Einsatz von autonomen Drohnenrobotern sinnvoll sein, wenn die autonomen mobilen Roboter zur Automatisierungsaufgabe aus Kostengründen mit einem minimalen Sensor-Setup arbeiten sollen. Die autonomen Drohnenroboter können je nach Anforderung Bewegungsfreiheitsgrade in X-,Y- und Z-Richtung haben.

Eine Erfassung der Umgebung und die Positionsbestimmung kann anhand der Sensortechnologien UWB-Funk-Lokalisierung und LIDAR bzw. LIDAR-Lokalisierung erfolgen. Die UWB-Funk Lokalisierung benutzt hierzu beispielsweise UWB-Funkstationen und UWB-Tags, bzw. UWB Transponder. Diese beiden Technologien stehen aber nur exemplarisch für unterschiedlichste Möglichkeiten.

In Weiterbildung der Erfindung weist das Anlagensicherheitssystem eine digitale Karte auf.

Beispielsweise ermittelt eine UWB-Lokalisierung die Position der unterschiedlichen Anlagenteile und autonomen mobilen Robotern oder Fahrzeugen mittels Laufzeitmessung und Triangulation. Auch LIDAR wird beispielsweise genutzt um anhand der Konturdaten die Karte zu erstellen.

Initial wird mit einem autonomen mobilen Roboter die Karte erstellt und als zentrale Karte im Anlagensicherheitssystem abgelegt. Diese zentrale Karte wird mit den Daten aus der UWB-Lokalisierung und ggf. WLAN-Daten angereichert. Somit ist im Anlagensicherheitssystem ein digitaler Zwilling des Anlagesystems entstanden.

Alle weiteren autonomen mobilen Roboter laden diese zentrale Karte aus dem Anlagensicherheitssystem und lokalisieren sich damit.

### Zur Positionsbestimmung:

Die Kenntnis der Position ist in diesem Ansatz wichtig. Die Position kann aus unterschiedlichen Quellen ermittelt werden. Im digitalen Zwilling, der auf dem Anlagensicherheitssystem ausgeführt wird befindet sich die Karte des Anlagensystems. Diese Karte wird durch die Positionsdaten und die bildgebenden Daten der Anlagenteile und autonomen mobilen Roboter ständig aktualisiert.

Die Karte im Anlagensicherheitssystem und die Daten aus den positionsbestimmenden und bildgebenden Daten werden auf den autonomen mobilen Robotern genutzt, um die Position jedes autonomen mobilen Roboters zu bestimmen. Die Karte auf dem Anlagensicherheitssystem kann auch als lokale Kopie auf den autonomen mobilen Robotern abgelegt sein.

In Weiterbildung der Erfindung erfolgt eine Positionsbestimmung aller Anlagenteile und autonomen mobilen Roboter.

### Erfassung von Änderungen in der Karte des digitalen Zwillings und Maßnahmen:

Die autonomen mobilen Roboter liefern kontinuierlich Daten an das Anlagensicherheitssystem, um die Karte aktuell zu halten und haben im Gegenzug auch kontinuierlich Zugriff auf eine aktuelle Karte.

Weiterhin erhält jeder autonome mobile Roboter vom Anlagensicherheitssystem Identifikationskennungen über die weiteren beweglichen Objekte (z. B. autonom mobile Fahrzeuge, autonome mobile Roboter, bewegliche Maschinen, Anlageteile) die sich in der Umgebung befinden. Diese Information enthält beispielweise weitere Informationen wie, z.B. die Klassifikation des Objekts und die genaue Position, Bewegungsinformationen, etc.

Sobald ein autonomer mobiler Roboter eine Änderung in Bezug auf die Karte feststellt, und über die vorhandenen Identifikationskennungen keine Gefährdung von Personen ausschließen kann, wird eine Risikominderungs-Prozedur eingeleitet.

Im Rahmen der Risikominderungs-Prozedur wird in einem ersten Schritt auf den autonome mobile Roboter lokal mit Kollisionsvermeidung reagiert. In einem zweiten Schritt werden die autonome mobile Roboter die sich in der Umgebung der Änderungen der realen Situation im Vergleich zum digitalen Zwilling befinden über das Anlagensicherheitssystem über die Änderung informiert. In einem dritten Schritt wird auf dem Anlagensicherheitssystem geprüft, ob es sich bei der geänderten Situation um ein bereits klassifiziertes Risiko handelt, siehe "Risikominderung für die im Anlagensicherheitssystem bereits eine Risikoklassifizierung vorhanden ist.

Wenn das Risiko bereits klassifiziert ist, dann werden auf den autonomen mobilen Robotern die entsprechenden Datensätze aktualisiert, d.h. die in Software umgesetzten Maßnahmen erfahren damit auch eine Aktualisierung.

Wenn für die neue Situation kein klassifiziertes Risiko, und damit Datensatz auf dem Anlagensicherheitssystem vorhanden ist, so kann auf dem Anlagenbibliothekssystem in der öffentlichen Bibliotheksebene nach einem passenden Risiko und Datensatz gesucht werden.

Wenn auch auf dem Anlagenbibliothekssystem in der öffentlichen Bibliotheksebene kein entsprechend klassifizierter Datensatz vorhanden ist, dann muss eine Risikoanalyse und ggf. die Planung und Implementierung von Maßnahmen durch Experten vorgenommen werden. Im Rahmen dieser Aktivität entsteht dann ein neuer klassifizierter Datensatz, der in das Anlagensicherheitssystem und/oder in das Anlagenbibliothekssystem auf der Bibliotheksebene übernommen werden kann.

Experten können in diesem Zusammenhang ausgebildete Spezialisten für funktionale Sicherheit sein, oder auch automatisierte Künstliche Intelligenz gestützte Expertensysteme.

### Zur Kollisionsvermeidung:

Kollisionsvermeidung ist die Primärschutzfunktion die auf den autonomen mobilen Robotern lokal ausgeführt werden, sobald sich ein Objekt in der Fahrtrichtung des autonomen mobilen Roboters befindet und nicht ausgeschlossen werden kann, dass es sich um eine Person handelt. Zur Detektion von Objekten werden sowohl Daten von Sensoren auf dem autonomen mobilen Roboter wie auch Daten aus dem Anlagensicherheitssystem herangezogen.

Risikominderung für die im Anlagensicherheitssystem bereits eine Risikoklassifizierung vorhanden ist:
Anhand der verfügbaren Daten, beispielsweise anhand primär den bildgebenden Daten, wird ein Abbild der Situation auf dem autonomen mobilen Roboter lokal erstellt. Die Daten werden an das Anlagensicherheitssystem übertragen. Dort können weitere Daten herangezogen werden, um die Abbildung der Situation zu detaillieren. Diese weiteren Daten können von stationären bildgebenden Sensoren, bildgebenden Sensoren anderer autonome mobile Roboter in der Nähe, usw. stammen. Anhand der Situation wird in der Datenbank des Anlagensicherheitssystems nachgesehen, ob diese Situation bereits ein bekanntes Szenario ist. Wenn für die Situation schon eine Risikoklassifizierung vorhanden ist, dann werden die entsprechenden Maßnahmen auf dem autonomen mobilen Roboter ausgeführt.

### Risikoanalyse:

Es erfolgt ein Vergleich der Situation mit bereits klassifizierten Datensätzen auf dem Anlagensicherheitssystem. Wenn eine Übereinstimmung gefunden wird, dann wird dieser Datensatz übernommen für die Maßnahmen und Implementierung.

### Risikominderung für unklassifizierte Risiken durch Experten /Personen:

Die Risikominderung neuer nicht klassifizierter Risiken wird nach den geltenden normativen Vorschiften (beispielweise ISO 12100, ISO 13849, usw.) durch Experten / Personen durchgeführt. Generell werden die folgenden Prozessschritte eingehalten:
- Risikoanalyse
- Design der Maßnahmen
- Implementierung der Maßnahmen
- Verifikation und Validierung der Maßnahmen
- Erzeugung eines klassifizierten Datensatzes

Diese Vorgehensweise erfordert, dass alle erforderlichen Schritte nach einem einheitlichen und softwaregestützten Regelwerk erfolgen. Das bedeutet, dass das Anlagenbibliothekssystem auch die entsprechenden Entwicklungswerkzeuge zur Risikoanalyse, Softwareentwicklung, Simulation, Verifikation, Validierung usw. anbietet. Teileweise können bei Implementierung entsprechender Schnittstellen und Services Werkzeuge von Dritten in den einzelnen Schritten verwendet werden.

### Risikoanalyse:

Hierbei wird eine Situation hinsichtlich des Verletzungsrisikos für einen Menschen analysiert. Die Analyse geschieht anhand von unterschiedlichen Merkmalen wie Geometrie, Struktur, Bewegungsprofilen, Wechselwirkung mit anderen Anlagenteilen, Auftretenswahrscheinlichkeit, Häufigkeit und Dauer der Exposition, Schwere der möglichen Verletzung usw.

### Maßnahmendesign:

Es werden technische und organisatorische Maßnahmen definiert mit deren Hilfe das Verletzungsrisiko für Menschen ausreichend reduziert werden kann. Da es das Ziel ist, soweit als möglich vorhandene Hardware zu nutzen und die Maßnahmen weitestgehend in Software zu implementieren ist dies bei der Definition der Maßnahmen als Leitlinie vorgegeben.

Im Rahmen des Maßnahmendesigns wird auch definiert, welche Parameter anwendungsspezifisch konfiguriert werden können, und nach welchen Regeln die Konfiguration dann erfolgt.

Weiterhin werden in diese Phase auch die internen und externen Schnittstellen der Maßnahme des Systems definiert.

Weiterhin wird in dieser Phase auch festgelegt, auf welchen Zielsystemen, also Hardwareplattformen die Maßnahme appliziert werden soll.

### Implementierung:

Im Rahmen der Implementierung werden entsprechend der geltenden Normen Algorithmen entwickelt, dokumentiert und implementiert.

Es können auch für unterschiedliche Hardware und Betriebssystemplattformen mehrere Implementierungen erfolgen.

### Verifikation und Validierung:

Im Rahmen der Verifikation und Validierung werden die Implementierten Maßnahmen hinsichtlich Ihrer Wirksamkeit mittels Simulation und Test überprüft. Bei positivem Ergebnis werden die Maßnahmen als Validiert gekennzeichnet.

### Erzeugung eines klassifizierten Datensatzes:

Nachdem alle vorgenannten Schritte durchlaufen sind, ist eine neue Situation, welches ein neues Risiko hervor gebracht hat komplett beschrieben und die Maßnahmen zur Risikominderung sind entwickelt, dokumentiert und validiert. Die hier entstandenen Daten werden als Datensatz abgelegt und können dann sowohl im Anlagensicherheitssystem als auch in dem Anlagenbibliothekssystem auf der öffentlichen Bibliotheksebene zur Verfügung gestellt werden.

Weiterhin wird die Anwendung der Werkzeuge ebenfalls als Datensatz für Methodik abgelegt, um somit die zur Verfügung stehenden kontinuierlich zu verbessern. In Weiterbildung der Erfindung werden Abweichungen zwischen der digitalen Karte und der erkannten realen Umgebungssituation von dem Anlagensicherheitssystem erkannt.

Gemäß der Erfindung ist das Anlagenbibliothekssystem ausgebildet ist, anwendbare Normen und/oder Vorschriften einzulesen und das Anlagenbibliothekssystem ist ausgebildet, die automatische und dynamische Erstellung der Risikobeurteilung basierend auf den anwendbaren Normen und/oder Vorschriften durchzuführen.

Risikominderung für unklassifizierte Risiken durch automatisierte Expertensysteme im Anlagenbibliothekssystem:
Die Risikominderung neuer nicht klassifizierter Risiken wird nach den geltenden normativen Vorschiften (beispielweise ISO 12100, ISO 13849, usw.) durch ein automatisiertes Expertensystem durchgeführt. Generell werden die folgenden Prozessschritte eingehalten:
- Risikoanalyse
- Design der Maßnahmen
- Implementierung der Maßnahmen
- Verifikation und Validierung der Maßnahmen
- Erzeugung eines klassifizierten Datensatzes

Diese Vorgehensweise erfordert, dass alle erforderlichen Schritte nach einem einheitlichen und softwaregestützten Regelwerk erfolgen. Das bedeutet, dass die Methoden der Risikominderung die menschliche Experten anwenden, im automatisierten Expertensystem derart als Algorithmus abgebildet sind, dass das Expertensystem die gleiche Durchführung und Methodik anwenden kann wie menschliche Experten.

Weiterhin kann das automatisierte Expertensystem auf technologische Ansätze aus einer künstlichen Intelligenz zurückgreifen. Der Nachweise der Risikominderung ist dann nicht nur basierend auf den im Anlagensicherheitssystem vorhandenen Daten und Szenarien, sondern auch erweiterte externen Daten zu erbringen.

### Risikoanalyse:

Hierbei wird eine Situation hinsichtlich des Verletzungsrisikos für einen Menschen analysiert. Die Analyse geschieht anhand von unterschiedlichen Merkmalen wie Geometrie, Struktur, Bewegungsprofilen, Wechselwirkung mit anderen Anlagenteilen, Auftretenswahrscheinlichkeit, Häufigkeit und Dauer der Exposition, Schwere der möglichen Verletzung usw.

Der Einsatz des automatisierten Expertensystems kann in dieser Phase bereits durch den Einsatz von Simulation gestützt sein. D.h. das Anlagenbibliothekssystem hat einen kompletten digitalen Zwilling des Anlagensystems und simuliert alle möglichen vorhersehbaren Szenarien an der neu entstandenen Risikoposition durch. Aus der Simulation ergibt sich dann das Gefährdungsrisiko an dieser Stelle.

### Maßnahmendesign, Implementierung, Verifikation und Validierung:

Die Prozessschritte vom Maßnahmendesign bis zur Validierung sind iterative Schritte die sehr stark auf Simulation und Training von Algorithmen basieren. Diese Schritte werden so lange vom automatisierten Expertensystem durchlaufen, bis die Simulation auf dem Anlagenbibliothekssystem als Ergebnis eine ausreichend hohe Risikominderung zum Ergebnis hat. Danach wird der Datensatz auf dem Anlagenbibliothekssystem zur Verfügung gestellt, allerdings nicht als validiert gekennzeichnet.

Die Implementierung für unterschiedliche Zielsysteme kann bereits Teil des zur Verfügung gestellten Datensatzes sein, ist aber ohne eine Validierung durch eine Person noch nicht betriebsfähig.

### Erzeugung eines klassifizierten Datensatzes:

Nachdem alle notwendigen vorgenannten Schritte durchlaufen sind, ist eine neue Situation, welches ein neues Risiko hervor gebracht hat für genau diese spezielle Zielapplikation einmalig komplett beschrieben und die Maßnahmen zur Risikominderung sind entwickelt und validiert.

Damit dieser Datensatz als klassifiziert in das Anlagenbibliothekssystem und Anlagensicherheitssystem aufgenommen werden kann, muss er durch Praxiserprobung und mehrfache Validierung einer Expertengruppe qualifiziert werden.

Die hier entstandenen Daten werden als Datensatz abgelegt und können dann sowohl im Anlagensicherheitssystem als auch in dem Anlagenbibliothekssystem auf der Bibliotheksebene zur Verfügung gestellt werden.

Gemäß der Erfindung ist das Anlagensicherheitssystem ausgebildet ist, Risikominderungsmaßnahmen zyklisch oder nach Feststellung einer Änderung zu erfassen und zu überprüfen und ausgebildet, die Risikominderungsmaßnahmen zyklisch oder nach Feststellung einer Änderung anzupassen.

### Sicherheitsmechanismen bei der Erfassung der Umgebung:

Die Umgebung wird aus unterschiedlichen Perspektiven und unterschiedliche Sensortechnologien erfasst.

Unterschiedliche Perspektiven sind:
- Sensoren an unterschiedlichen autonomen mobilen Robotern, beweglichen und stationären Maschinen und zusätzlich noch Sensoren, bzw. Informationen aus Infrastrukturkomponenten

Unterschiedliche Sensortechnologien:
- Positionserfassung
- Identifikationssensoren
- Bildgebende Sensoren (Kamera, LIDAR, Radar, usw.)
- Funk-Triangulation

Es können weitere nicht aufgeführte Sensortechnologien eingesetzt werden. Sicherheitsmechanismen bei der Erstellung des Digitalen Zwillings:
Unterschiedliche autonome mobile Roboter und Anlagenteile mit unterschiedlichen Hardware-Plattformen und Navigationssoftwaren nutzen die zentrale Karte. Damit wird die zentrale Karte ständig überprüft.

Sicherheitsmechanismen bei der Datenhaltung der Datensätze:
Die Datensätze im Anlagensicherheitssystem und Anlagenbibliothekssystem werden auf unterschiedliche jeweils redundanten Teilen des Anlagenbibliothekssystems abgelegt. Bekannte Sicherungsmethoden der IT und OT werden angewendet.

### Sicherheitsmechanismen bei der Kommunikation zwischen den Systemteilnehmern:

Die Kommunikation muss generell entsprechend den Aufgaben der Kommunikation Sicherheitsanforderungen genügen. Die Sicherheitsmechanismen können hier von einfachen CRCs, wie beispielsweise in der Sicherungsschicht von TCP, über sichere Kommunikationsprotokolle bis hin zur Nutzung von Block-Chain-Technologien reichen.

Dieser Ansatz ermöglich die Umsetzung dynamischer automatisierte Anlagenplanung und damit die Umsetzung von Industrie 4.0-Anforderungen.

Die Anlagenteile und damit die Teile in der Anlage selbst übernehmen Aufgaben des Safety-Engineerings.

Bewertet Risiken und die zugehörigen Maßnahmen werden in dem zentralen Anlagenbibliothekssystem abgelegt und sind damit weltweit hochgradig skalierbar und multiplizierbar.

In Weiterbildung der Erfindung sind das Anlagensicherheitssystem und das Anlagenbibliotheksystem als Expertensystem aufgebaut sind, welche dazu ausgebildet sind die Datenbasis für neue Gefährdungen kontinuierlich zu erweitern und dazu ausgebildet sind neue Datensätze zu generieren.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein System mit mindestens einem Anlagensystem;
- Figur 2 bis Figur 4: jeweils eine schematische Darstellung eines Anlagesystems;
- Figur 5: ein Ablaufdiagramm einer Klassifizierungsanfrage;
- Figur 6: einen schematischen Ablaufplan bei bereits klassifizierten Risiken;
- Figur 7: zeigt einen schematischen Ablaufplan bei unklassifizierten Risiken und einer Bewertung durch einen Experten;
- Figur 8: eine Risikominderung für unklassifizierte Risiken durch automatisierte Expertensysteme im Anlagenbibliothekssystem.

In den nachfolgenden Figuren sind identische Teile mit identischen Bezugszeichen versehen.

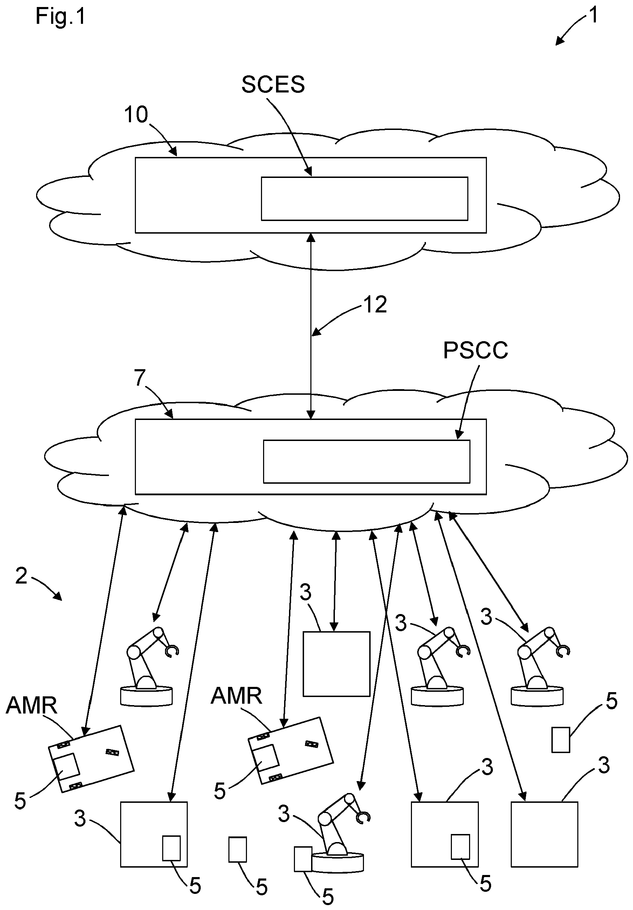

Figur 1 zeigt ein System 1 mit mindestens einem Anlagesystem 2 mit mindestens mehreren Anlagenteilen 3, mit mindestens mehreren autonomen mobilen Robotern AMR, bewegbaren Maschinen und mehreren Sensoren 5 zur Generierung von Daten zur Verwendung zur sicherheitsgerichteten Absicherung des Anlagesystems 2, wobei zugehörig zu dem Anlagensystem 2 ein lokales Anlagensicherheitssystem PSCC vorhanden ist, wobei Daten des lokalen Anlagensicherheitssystem PSCC in einer ersten Datenbank 7 gespeichert sind, wobei das lokale Anlagensicherheitssystem PSCC ein erstes Datenmodell mit Datensätzen des Anlagesystems 2 aufweist, wobei zugehörig zu dem lokalen Anlagensicherheitssystem PSCC ein dezentrales öffentliches Anlagenbibliothekssystem SCES vorhanden ist, wobei das Anlagenbibliothekssystem SCES in einer zweiten Datenbank 10 gespeichert ist, wobei das Anlagenbibliothekssystem SCES mindestens ein zweites Datenmodell mindestens Datensätze für das Anlagensicherheitssystem (PSCC)2 aufweist, wobei das Anlagensicherheitssystem PSCC und das Anlagenbibliothekssystem SCES über eine Schnittstelle 12 miteinander verbunden sind, wobei über die Schnittstelle 12 Daten und Datensätze zwischen dem Anlagensicherheitssystem PSCC und dem Anlagenbibliothekssystem SCES übertragbar sind.

Gemäß Figur 1 gibt es ein öffentliches Anlagenbibliothekssystem. Der Betreiber dieser Anwendung, also dem Anlagenbibliothekssystem SCES ist ein Unternehmen oder eine Nutzergruppe, welche sicherstellt, dass es zu ermittelten Gefährdungen auch passende Funktionen und Maßnahmen zur Risikominderung gibt. Hierzu verfügt das Anlagenbibliothekssystem SCES über eine Bibliothek von Gefährdungen, Methoden, Funktionen, Algorithmen, Maßnahmen und Risikokennzahlen in der zweiten Datenbank 10.

Gestützt auf Expertenwissen sind in dem Anlagenbibliothekssystem SCES zu den hinterlegten Gefährdungen auch immer zugeordnete Risikobewertungen und Maßnahmen und Funktionen abgelegt. Basierend auf diesem Expertenwissen wird für jede Gefährdung auch die Methode der Lösungsfindung, von der Gefährdung über das ermittelte Risiko bis hinzu zur Maßnahme und den notwendigen Algorithmen zur Risikominderung in der zweiten Datenbank 10 hinterlegt.

Auf Anlagenebene gibt es das lokale Anlagensicherheitssystem PSCC. Dieses repräsentiert alle in der Anlage auftretenden Gefährdungen mit den zugehörigen Maßnahmen und Sicherheitsfunktionen in einer ersten Datenbank 7.

Die Datensätze weisen mindestens jeweils eine Geometrie, eine Gefährdung, einen Sicherheitslevel, eine Position, eine Geschwindigkeit, eine Identifikation und eine Maßnahme auf.

Das Anlagensicherheitssystem PSCC ist ausgebildet, eine Risikobewertung und eine Risikobeurteilung für das Anlagensystem 2 zyklisch oder nach Feststellung einer Änderung durchzuführen und Entscheidungen über eine Notwendigkeit einer Risikominimierung zyklisch oder nach Feststellung einer Änderung zu treffen, wodurch das Anlagensicherheitssystem PSCC zur automatischen und dynamischen Erstellung einer Risikobeurteilung des Anlagensystems 2 ausgebildet ist.

### Erfassung der Umgebung:

Basis für die Maßnahmen zur Risikominderung ist die Verfügbarkeit eines digitalen Zwillings des Anlagesystems 2 als Abbildung in dem Anlagensicherheitssystem PSCC. Im Fokus des digitalen Zwillings stehen Bewegungsabläufe, Positionen und weitere Charakteristika die zu Gefährdungen für Menschen in dem Anlagensystem 2 führen können. Hierzu werden einerseits alle erforderlichen Sensoren 5 an das Anlagensicherheitssystem PSCC angebunden, um dort ihre Daten zu Generierung des digitalen Zwillings einspeisen zu können. Damit sich die Anlagengeometrie den Anforderungen des aktuellen Fertigungsauftrags anpassen kann muss das Abbild des Anlagensystems 2 in dem Anlagensicherheitssystem PSCC ständig aktuell gehalten werden.

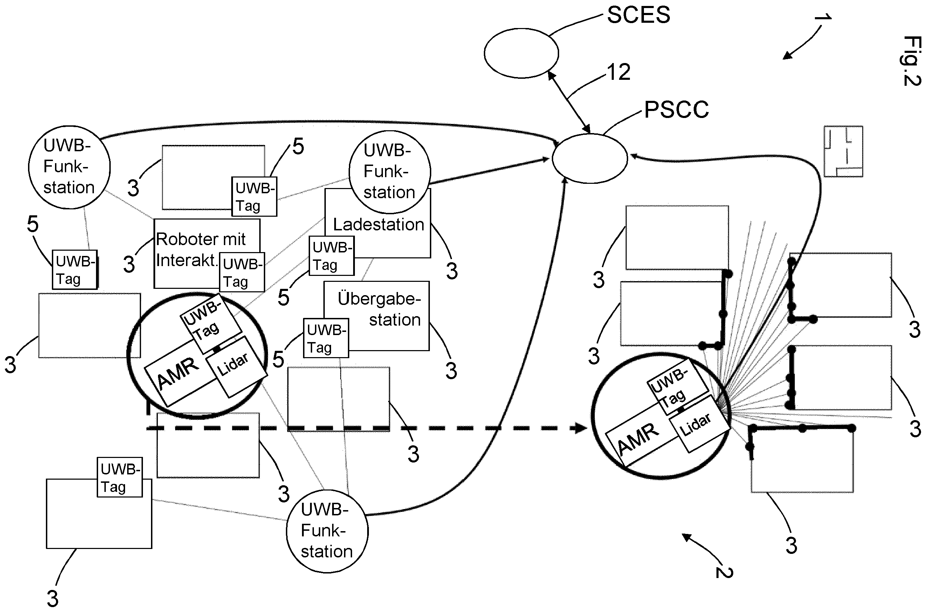

Figur 2 zeigt eine schematische Darstellung eines Anlagesystems 2. Gemäß Figur 2 sind Sensoren an den autonomen mobilen Robotern AMR und an den Anlagenteilen 3 angeordnet und die Sensoren 5 erzeugen Sensordaten für das Anlagensicherheitssystem PSCC.

Autonome mobile Roboter AMR, bewegliche Maschinen bzw. bewegliche Anlagenteile 3 werden hierzu beispielsweise mit bildgebenden, positionsbestimmenden Sensoren 5 und Identifikationssensoren ausgestattet um bei der Erfüllung der Automatisierungsaufgabe zur Laufzeit den digitalen Zwilling ständig aktuell zu halten. So liefern beispielsweise unterschiedliche autonome mobile Roboter AMR ständig oder nach Anforderung des Anlagensicherheitssystems PSCC Position und entsprechende bildgebende Daten an das Anlagensicherheitssystem PSCC. Somit können diese Daten gegeneinander plausibilisiert werden, was zur Fehlersicherheit des digitalen Zwillings beträgt. Zur Optimierung der räumlichen Abbildung können diese Daten aus unterschiedlichen Quellen weiterhin auch fusioniert werden.

Zur Vermeidung von systematischen Fehlern können die autonomen mobilen Roboter AMR auch mit unterschiedlichen Sensortechnologien ausgestattet werden.

In einigen Fällen kann es auch erforderlich sein, dass zusätzlich zu den autonomen mobilen Robotern AMR die für die Automatisierungsaufgabe erforderlich sind auch Drohnen als autonome mobile Roboter zum Einsatz kommen. Dies kann der Fall sein, wenn Bildgebende Daten aus unterschiedlichen Perspektiven erforderlich sind, welche die autonomen mobilen Roboter AMR nicht optimal liefern können. Weiterhin kann der Einsatz von autonomen Drohnenrobotern sinnvoll sein, wenn die autonomen mobilen Roboter AMR zur Automatisierungsaufgabe aus Kostengründen mit einem minimalen Sensor-Setup arbeiten sollen. Die autonomen Drohnenroboter können je nach Anforderung Bewegungsfreiheitsgrade in X-,Y und Z-Richtung haben.

Eine Erfassung der Umgebung und die Positionsbestimmung kann anhand der Sensortechnologien UWB-Lokalisierung und LIDAR bzw. LIDAR-Lokalisierung erfolgen. Die UWB-Funk Lokalisierung benutzt hierzu beispielsweise UWB-Funkstationen und UWB-Tags, bzw. UWB Transponder. Diese beiden Technologien stehen aber nur exemplarisch für unterschiedlichste Möglichkeiten.

Beispielsweise weist das Anlagensicherheitssystem eine digitale Karte auf.

Beispielsweise ermittelt eine UWB-Lokalisierung die Position der unterschiedlichen Anlagenteile 3 und autonomen mobilen Robotern AMR oder Fahrzeugen mittels Laufzeitmessung und Triangulation. Auch LIDAR wird beispielsweise genutzt um anhand der Konturdaten die Karte zu erstellen.

Initial wird mit einem autonomen mobilen Roboter AMR die Karte erstellt und als zentrale Karte im Anlagensicherheitssystem abgelegt. Diese zentrale Karte wird mit den Daten aus der UWB-Lokalisierung und ggf. WLAN-Daten angereichert. Somit ist im Anlagensicherheitssystem PSCC ein digitaler Zwilling des Anlagesystems 2 entstanden.

Alle weiteren autonomen mobilen Roboter AMR laden diese zentrale Karte aus dem Anlagensicherheitssystem PSCC und lokalisieren sich damit.

### Zur Positionsbestimmung:

Die Kenntnis der Position ist in diesem Ansatz wichtig. Die Position kann aus unterschiedlichen Quellen ermittelt werden. Im digitalen Zwilling, der auf dem Anlagensicherheitssystem PSCC ausgeführt wird befindet sich die Karte des Anlagensystems 2. Diese Karte wird durch die Positionsdaten und die bildgebenden Daten der Anlagenteile 3 und autonomen mobilen Roboter AMR ständig aktualisiert.

Die Karte im Anlagensicherheitssystem PSCC und die Daten aus den positionsbestimmenden und bildgebenden Daten werden auf den autonomen mobilen Robotern AMR genutzt, um die Position jedes autonomen mobilen Roboters AMR zu bestimmen. Die Karte auf dem Anlagensicherheitssystem PSCC kann auch als lokale Kopie auf den autonomen mobilen Robotern AMR abgelegt sein.

Beispielsweise erfolgt eine Positionsbestimmung aller Anlagenteile 3 und autonomen mobilen Roboter AMR.

### Erfassung von Änderungen in der Karte des digitalen Zwillings und Maßnahmen:

Die autonomen mobilen Roboter AMR liefern kontinuierlich Daten an das Anlagensicherheitssystem PSCC, um die Karte aktuell zu halten und haben im Gegenzug auch kontinuierlich Zugriff auf eine aktuelle Karte.

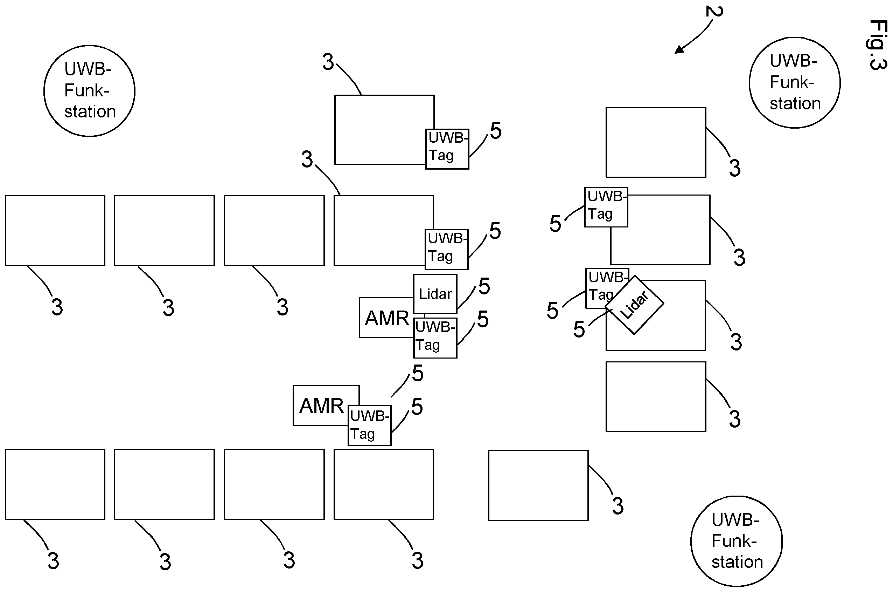

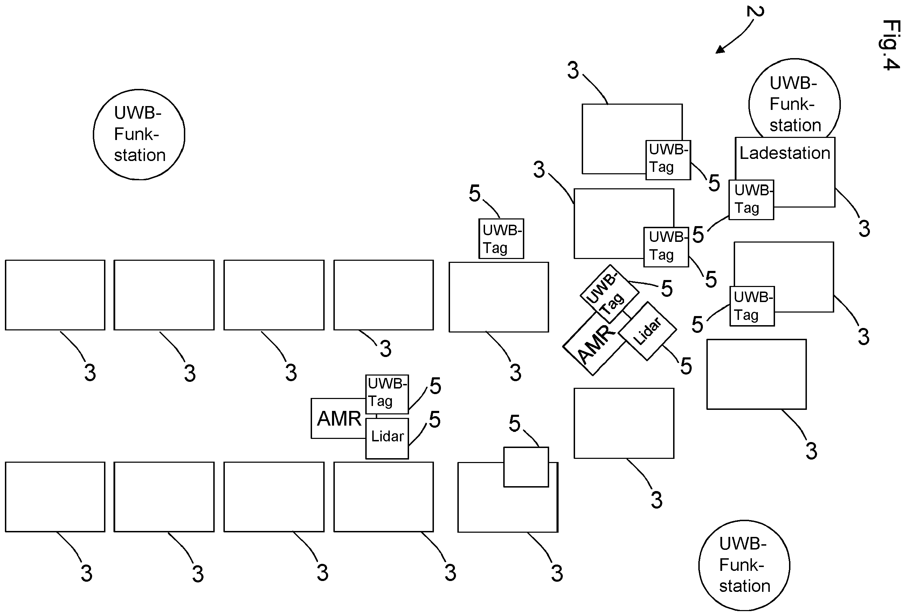

Figur 3 zeigt eine schematische Darstellung eines Anlagesystems 2. Figur 4 zeigt das Anlagesystem gemäß Figur 3 mit vorgenommenen Änderungen.

Jeder autonome mobile Roboter AMR erhält vom Anlagensicherheitssystem SCES Identifikationskennungen über die weiteren beweglichen Objekte (z. B. autonom mobile Fahrzeuge, autonome mobile Roboter AMR, bewegliche Maschinen, Anlageteile 3) die sich in der Umgebung befinden. Diese Information enthält beispielweise weitere Informationen wie, z.B. die Klassifikation des Objekts und die genaue Position, Bewegungsinformationen, etc.

Sobald ein autonomer mobiler Roboter eine Änderung gemäß Figur 4 in Bezug auf die Karte feststellt, und über die vorhandenen Identifikationskennungen keine Gefährdung von Personen ausschließen kann, wird eine Risikominderungs-Prozedur eingeleitet.

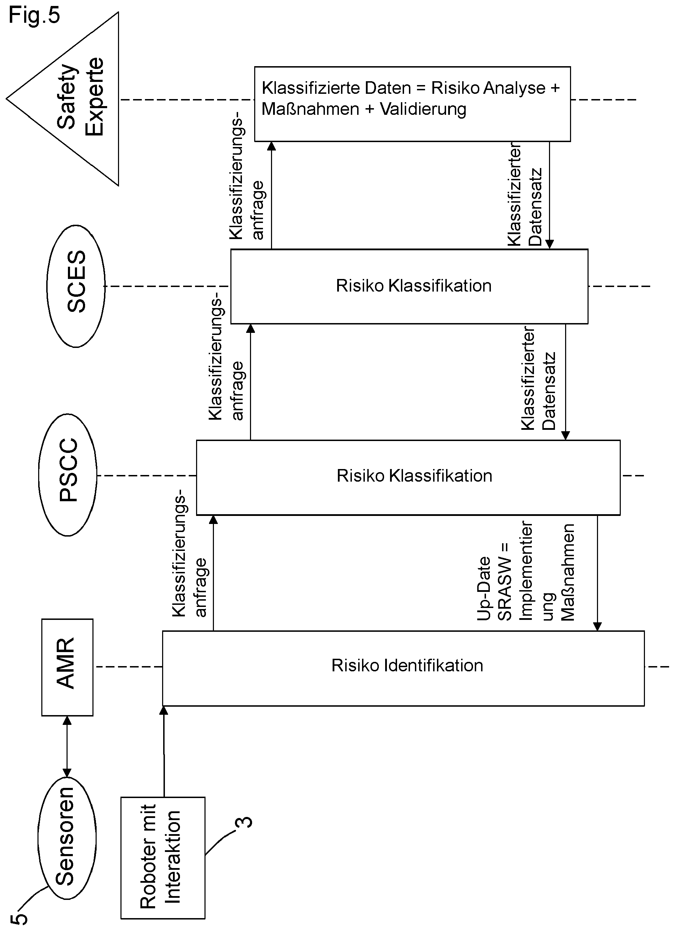

Figur 5 zeigt ein Ablaufdiagramm einer Klassifizierungsanfrage.

Im Rahmen der Risikominderungs-Prozedur wird in einem ersten Schritt auf den autonome mobile Roboter AMR lokal mit Kollisionsvermeidung reagiert. In einem zweiten Schritt werden die autonomen mobilen Roboter AMR die sich in der Umgebung der Änderungen der realen Situation im Vergleich zum digitalen Zwilling befinden über das Anlagensicherheitssystem PSCC über die Änderung informiert. In einem dritten Schritt wird auf dem Anlagensicherheitssystem PSCC geprüft, ob es sich bei der geänderten Situation um ein bereits klassifiziertes Risiko handelt, siehe "Risikominderung für die im Anlagensicherheitssystem PSCC bereits eine Risikoklassifizierung vorhanden ist.

Wenn das Risiko bereits klassifiziert ist, dann werden auf den autonome mobile Roboter AMR die entsprechenden Datensätze aktualisiert, d.h. die in Software umgesetzten Maßnahmen erfahren damit auch eine Aktualisierung.

Wenn für die neue Situation kein klassifiziertes Risiko, und damit Datensatz auf dem Anlagensicherheitssystem PSCC vorhanden ist, so kann auf der Anlagenbibliothekssystem SCES in der öffentlichen Bibliotheksebene nach einem passenden Risiko und Datensatz gesucht werden.

Wenn auch auf dem Anlagenbibliothekssystem SCES in der öffentlichen Bibliotheksebene kein entsprechend klassifizierter Datensatz vorhanden ist, dann muss eine Risikoanalyse und ggf. die Planung und Implementierung von Maßnahmen durch Experten vorgenommen werden. Im Rahmen dieser Aktivität entsteht dann ein neuer klassifizierter Datensatz, der in das Anlagensicherheitssystem PSCC und/oder in die Anlagenbibliothekssystem SCES auf dem Bibliotheksebene übernommen werden kann.

Experten können in diesem Zusammenhang ausgebildete Spezialisten für funktionale Sicherheit sein, oder auch automatisierte Künstliche Intelligenz gestützte Expertensysteme.

### Zur Kollisionsvermeidung:

Kollisionsvermeidung ist die Primärschutzfunktion die auf den autonomen mobilen Robotern AMR lokal ausgeführt werden, sobald sich ein Objekt in der Fahrtrichtung des autonomen mobilen Roboters AMR befindet und nicht ausgeschlossen werden kann, dass es sich um eine Person handelt. Zur Detektion von Objekten werden sowohl Daten von Sensoren 5 auf dem autonome mobile Roboter AMR wie auch Daten aus dem Anlagensicherheitssystem PSCC herangezogen.

Risikominderung für die im Anlagensicherheitssystem PSCC bereits eine Risikoklassifizierung vorhanden ist:

Anhand der verfügbaren Daten, beispielsweise anhand primär den bildgebenden Daten, wird ein Abbild der Situation auf dem autonomen mobilen Roboter AMR lokal erstellt. Die Daten werden an das Anlagensicherheitssystem PSCC übertragen. Dort können weitere Daten herangezogen werden, um die Abbildung der Situation zu detaillieren. Diese weiteren Daten können von stationären bildgebenden Sensoren 5, bildgebenden Sensoren 5 anderer autonomer mobiler Roboter AMR in der Nähe, usw. stammen. Anhand der Situation wird in der Datenbank des Anlagensicherheitssystems PSCC nachgesehen, ob diese Situation bereits ein bekanntes Szenario ist. Wenn für die Situation schon eine Risikoklassifizierung vorhanden ist, dann werden die entsprechenden Maßnahmen auf dem autonomen mobilen Roboter AMR ausgeführt.

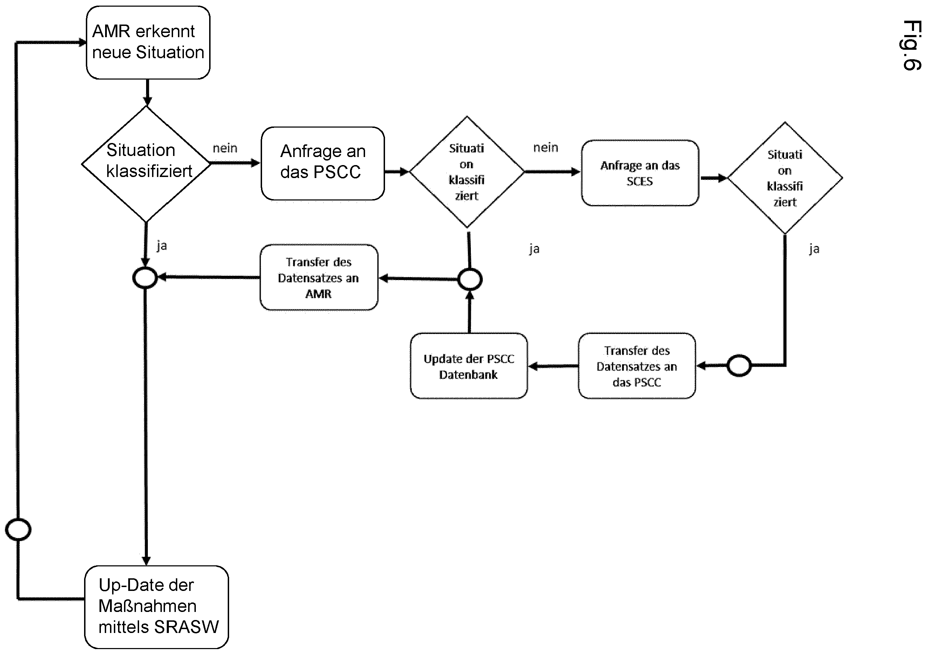

Figur 6 zeigt einen schematischen Ablaufplan bei bereits klassifizierten Risiken.

Gemäß einer Risikoanalyse erfolgt ein Vergleich der Situation mit bereits klassifizierten Datensätzen auf den Anlagensicherheitssystem PSCC. Wenn eine Übereinstimmung gefunden wird, dann wird dieser Datensatz übernommen für die Maßnahmen und Implementierung.

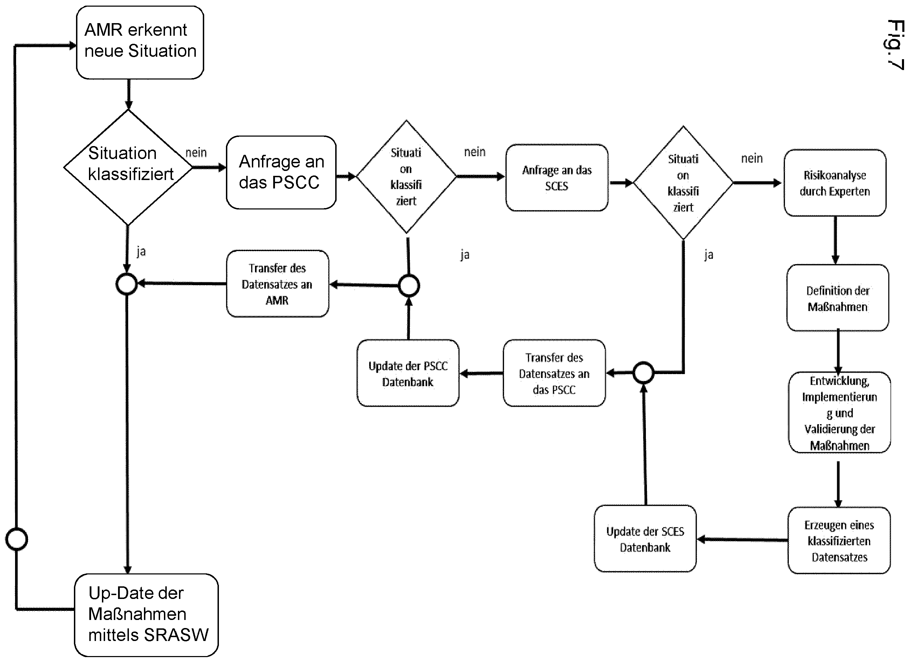

Figur 7 zeigt einen schematischen Ablaufplan bei unklassifizierten Risiken und einer Bewertung durch einen Experten.

Die Risikominderung neuer nicht klassifizierter Risiken wird nach den geltenden normativen Vorschiften (beispielweise ISO 12100, ISO 13849, usw.) durch Experten / Personen durchgeführt. Generell werden die folgenden Prozessschritte eingehalten:
- Risikoanalyse
- Design der Maßnahmen
- Implementierung der Maßnahmen
- Verifikation und Validierung der Maßnahmen
- Erzeugung eines klassifizierten Datensatzes

Diese Vorgehensweise erfordert, dass alle erforderlichen Schritte nach einem einheitlichen und softwaregestützten Regelwerk erfolgen. Das bedeutet, dass das Anlagenbibliothekssystem SCES auch die entsprechenden Entwicklungswerkzeuge zur Risikoanalyse, Softwareentwicklung, Simulation, Verifikation, Validierung usw. anbietet. Teileweise können bei Implementierung entsprechender Schnittstellen und Services Werkzeuge von Dritten in den einzelnen Schritten verwendet werden.

### Risikoanalyse:

Hierbei wird eine Situation hinsichtlich des Verletzungsrisikos für einen Menschen analysiert. Die Analyse geschieht beispielsweise anhand von unterschiedlichen Merkmalen wie Geometrie, Struktur, Bewegungsprofilen, Wechselwirkung mit anderen Anlagenteilen, Auftretenswahrscheinlichkeit, Häufigkeit und Dauer der Exposition, Schwere der möglichen Verletzung usw.

### Maßnahmendesign:

Es werden technische und organisatorische Maßnahmen definiert mit deren Hilfe das Verletzungsrisiko für Menschen ausreichend reduziert werden kann. Da es das Ziel ist, soweit als möglich vorhandene Hardware zu nutzen und die Maßnahmen weitestgehend in Software zu implementieren ist dies bei der Definition der Maßnahmen als Leitlinie vorgegeben.

Im Rahmen des Maßnahmendesigns wird auch definiert, welche Parameter anwendungsspezifisch konfiguriert werden können, und nach welchen Regeln die Konfiguration dann erfolgt.

### Verifikation und Validierung:

Im Rahmen der Verifikation und Validierung werden die Implementierten Maßnahmen hinsichtlich Ihrer Wirksamkeit mittels Simulation und Test überprüft. Bei positivem Ergebnis werden die Maßnahmen als Validiert gekennzeichnet.

### Erzeugung eines klassifizierten Datensatzes:

Nachdem alle vorgenannten Schritte durchlaufen sind, ist eine neue Situation, welches ein neues Risiko hervor gebracht hat komplett beschrieben und die Maßnahmen zur Risikominderung sind entwickelt, dokumentiert und validiert. Die hier entstandenen Daten werden als Datensatz abgelegt und können dann sowohl im Anlagensicherheitssystem PSCC als auch in der Anlagenbibliothekssystem SCES auf der öffentlichen Bibliotheksebene zur Verfügung gestellt werden.

Weiterhin wird die Anwendung der Werkzeuge ebenfalls als Datensatz für Methodik abgelegt, um somit die zur Verfügung stehenden kontinuierlich zu verbessern.

Das Anlagenbibliothekssystem ist ausgebildet, anwendbare Normen und/oder Vorschriften einzulesen und das Anlagenbibliothekssystem ist ausgebildet, die automatische und dynamische Erstellung der Risikobeurteilung basierend auf den anwendbaren Normen und/oder Vorschriften durchzuführen.

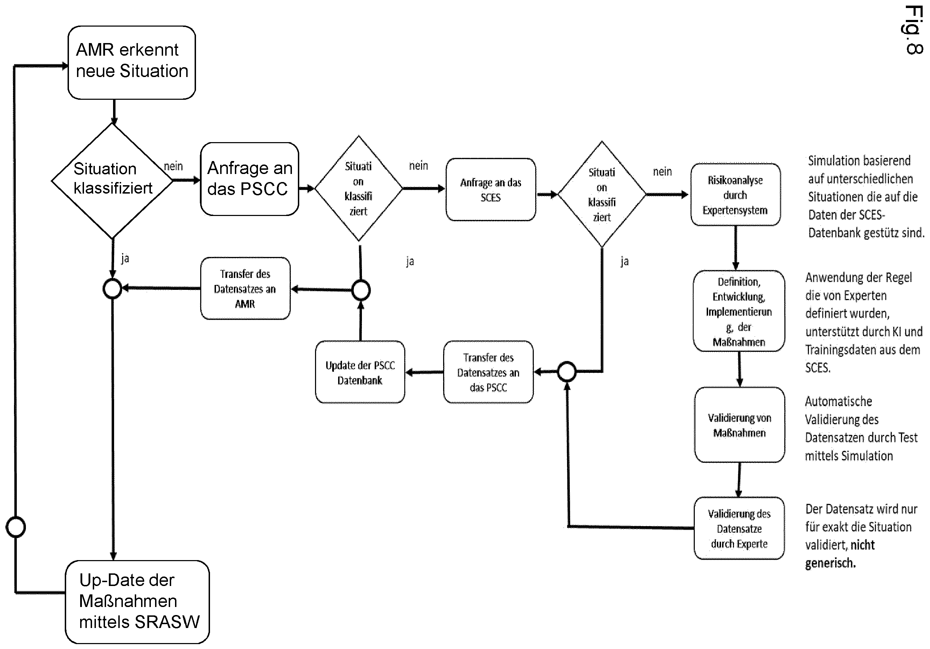

Figur 8 zeigt eine Risikominderung für unklassifizierte Risiken durch automatisierte Expertensysteme im Anlagenbibliothekssystem SCES.

Die Risikominderung neuer nicht klassifizierter Risiken wird nach den geltenden normativen Vorschiften (beispielweise ISO 12100, ISO 13849, usw.) durch ein automatisiertes Expertensystem durchgeführt. Generell werden die folgenden Prozessschritte eingehalten:
- Risikoanalyse
- Design der Maßnahmen
- Implementierung der Maßnahmen
- Verifikation und Validierung der Maßnahmen
- Erzeugung eines klassifizierten Datensatzes

Diese Vorgehensweise erfordert, dass alle erforderlichen Schritte nach einem einheitlichen und softwaregestützten Regelwerk erfolgen. Das bedeutet, dass die Methoden der Risikominderung die menschliche Experten anwenden, im automatisierten Expertensystem derart als Algorithmus abgebildet sind, dass das Expertensystem die gleiche Durchführung und Methodik anwenden kann wie menschliche Experten.

Weiterhin kann das automatisierte Expertensystem auf technologische Ansätze aus einer künstlichen Intelligenz zurückgreifen. Der Nachweise der Risikominderung ist dann nicht nur basierend auf den im Anlagensicherheitssystem PSCC vorhandenen Daten und Szenarien, sondern auch erweiterte externen Daten zu erbringen.

### Risikoanalyse:

Hierbei wird eine Situation hinsichtlich des Verletzungsrisikos für einen Menschen analysiert. Die Analyse geschieht anhand von unterschiedlichen Merkmalen wie Geometrie, Struktur, Bewegungsprofilen, Wechselwirkung mit anderen Anlagenteilen, Auftretenswahrscheinlichkeit, Häufigkeit und Dauer der Exposition, Schwere der möglichen Verletzung usw.

Der Einsatz des automatisierten Expertensystems kann in dieser Phase bereits durch den Einsatz von Simulation gestützt sein. D.h. das Anlagenbibliothekssystem SCES hat einen kompletten digitalen Zwilling des Anlagensystems 2 und simuliert alle möglichen vorhersehbaren Szenarien an der neu entstandenen Risikoposition durch. Aus der Simulation ergibt sich dann das Gefährdungsrisiko an dieser Stelle.

### Maßnahmendesign, Implementierung, Verifikation und Validierung:

Die Prozessschritte vom Maßnahmendesign bis zur Validierung sind iterative Schritte die sehr stark auf Simulation und Training von Algorithmen basieren. Diese Schritte werden so lange vom automatisierten Expertensystem durchlaufen, bis die Simulation auf dem Anlagenbibliothekssystem SCES als Ergebnis eine ausreichend hohe Risikominderung zum Ergebnis hat. Danach wird der Datensatz auf dem Anlagenbibliothekssystem SCES zur Verfügung gestellt, allerdings nicht als validiert gekennzeichnet.

Die Implementierung für unterschiedliche Zielsysteme kann bereits Teil des zur Verfügung gestellten Datensatzes sein, ist aber ohne eine Validierung durch eine Person noch nicht betriebsfähig.

Erzeugung eines klassifizierten Datensatzes:
Nachdem alle notwendigen vorgenannten Schritte durchlaufen sind, ist eine neue Situation, welches ein neues Risiko hervor gebracht hat für genau diese spezielle Zielapplikation einmalig komplett beschrieben und die Maßnahmen zur Risikominderung sind entwickelt und validiert.

Damit dieser Datensatz als klassifiziert in das Anlagenbibliothekssystem SCES und Anlagensicherheitssystem PSCC aufgenommen werden kann, muss er durch Praxiserprobung und mehrfache Validierung einer Expertengruppe qualifiziert werden.

Die hier entstandenen Daten werden als Datensatz abgelegt und können dann sowohl im Anlagensicherheitssystem PSCC als auch in der Anlagenbibliothekssystem SCES auf der Bibliotheksebene zur Verfügung gestellt werden.

Das Anlagensicherheitssystem 2 ist ausgebildet, Risikominderungsmaßnahmen zyklisch oder nach Feststellung einer Änderung zu erfassen und zu überprüfen und ausgebildet, die Risikominderungsmaßnahmen zyklisch oder nach Feststellung einer Änderung anzupassen.

### Sicherheitsmechanismen bei der Erfassung der Umgebung:

Die Umgebung wird aus unterschiedlichen Perspektiven und unterschiedliche Sensortechnologien erfasst.

Unterschiedliche Perspektiven sind:
- Sensoren 5 an unterschiedlichen autonomen mobilen Robotern AMR, beweglichen und stationären Maschinen und zusätzlich noch Sensoren 5, bzw. Informationen aus Infrastrukturkomponenten

Unterschiedliche Sensortechnologien:
- Positionserfassung
- Identifikationssensoren
- Bildgebende Sensoren (Kamera, LIDAR, Radar, usw.)
- Funk-Triangulation

Es können weitere nicht aufgeführte Sensortechnologien eingesetzt werden. Sicherheitsmechanismen bei der Erstellung des Digitalen Zwillings:

Unterschiedliche autonome mobile Roboter AMR und Anlagenteile 3 mit unterschiedlichen Hardware-Plattformen und Navigationssoftwaren nutzen die zentrale Karte. Damit wird die zentrale Karte ständig überprüft.

### Sicherheitsmechanismen bei der Datenhaltung der Datensätze:

Die Datensätze im Anlagensicherheitssystem PSCC und dem Anlagenbibliothekssystem SCES werden beispielsweise auf unterschiedliche jeweils redundanten Teilen des Anlagenbibliothekssystems SCES abgelegt. Bekannte Sicherungsmethoden der IT und OT werden angewendet.

### Sicherheitsmechanismen bei der Kommunikation zwischen den Systemteilnehmern:

Die Kommunikation muss generell entsprechend den Aufgaben der Kommunikation Sicherheitsanforderungen genügen. Die Sicherheitsmechanismen können hier von einfachen CRCs, wie beispielsweise in der Sicherungsschicht von TCP, über sichere Kommunikationsprotokolle bis hin zur Nutzung von Block-Chain-Technologien reichen.

### Bezugszeichen:

1 System
2 Anlagesystem
3 Anlagenteile
AMR autonom mobile Fahrzeuge, autonome mobile Roboter
5 Sensoren
PSCC Anlagensicherheitssystem
7 erste Datenbank
SCES Anlagenbibliothekssystem
10 zweite Datenbank
12 Schnittstelle

## Patentansprüche

1. System (1)
mit mindestens einem Anlagesystem (2) mit mindestens mehreren Anlagenteilen (3), mit mindestens mehreren autonomen mobilen Robotern (AMR), bewegbaren Maschinen und mehreren Sensoren (5) zur Generierung von Daten zur Verwendung zur sicherheitsgerichteten Absicherung des Anlagesystems (2), wobei zugehörig zu dem Anlagensystem (2) ein lokales Anlagensicherheitssystem (PSCC) vorhanden ist,
wobei Daten des lokalen Anlagensicherheitssystems (PSCC) in einer ersten Datenbank (7) gespeichert sind,
wobei das lokale Anlagensicherheitssystem (PSCC) ein erstes Datenmodell mit Datensätzen des Anlagesystems (2) aufweist,
wobei zugehörig zu dem lokalen Anlagensicherheitssystem (PSCC) ein dezentrales öffentliches Anlagenbibliothekssystem (SCES) vorhanden ist,
wobei das Anlagenbibliothekssystem (SCES) in einer zweiten Datenbank (10) gespeichert ist,
wobei das Anlagenbibliothekssystem (SCES) mindestens ein zweites Datenmodell mit mindestens Datensätzen für das Anlagensicherheitssystem (PSCC) aufweist,
wobei das Anlagensicherheitssystem (PSCC) und das Anlagenbibliothekssystem (SCES) über eine Schnittstelle (12) miteinander verbunden sind, wobei über die Schnittstelle (12) Daten und Datensätze zwischen dem Anlagensicherheitssystem (PSCC) und dem Anlagenbibliothekssystem (SCES) übertragbar sind,
wobei die Datensätze mindestens jeweils eine Geometrie, eine Gefährdung, einen Sicherheitslevel, eine Position, eine Geschwindigkeit, eine Identifikation und eine Maßnahme aufweisen,
wobei das Anlagensicherheitssystem (PSCC) ausgebildet ist, eine Risikobewertung und eine Risikobeurteilung für das Anlagensystem (2) zyklisch oder nach Feststellung einer Änderung durchzuführen und Entscheidungen über eine Notwendigkeit einer Risikominimierung zyklisch oder nach Feststellung einer Änderung zu treffen, wodurch das Anlagensicherheitssystem (PSCC) zur automatischen und dynamischen Erstellung einer Risikobeurteilung des Anlagensystems (2) ausgebildet ist,
wobei das Anlagenbibliothekssystem (SCES) ausgebildet ist, anwendbare Normen und/oder Vorschriften einzulesen und das Anlagenbibliothekssystem (SCES) ausgebildet ist, die automatische und dynamische Erstellung der Risikobeurteilung basierend auf den anwendbaren Normen und/oder Vorschriften durchzuführen,
wobei der autonome mobile Roboter eingerichtet ist, im Rahmen einer Risikominderungs-Prozedur in einem ersten Schritt lokal mit Kollisionsvermeidung zu reagieren,
wobei das Anlagensicherheitssystem eingerichtet ist, in einem zweiten Schritt die autonomen mobilen Roboter die sich in der Umgebung der Änderungen der realen Situation im Vergleich zu einem digitalen Zwilling befinden über die Änderung zu informieren,
wobei das Anlagensicherheitssystem eingerichtet ist, in einem dritten Schritt zu prüfen, ob es sich bei der geänderten Situation um ein bereits klassifiziertes Risiko handelt,
wobei die autonomen mobilen Roboter eingerichtet sind, die entsprechenden Datensätze zu aktualisieren, wenn das Risiko bereits klassifiziert ist,
wobei das Anlagensicherheitssystem eingerichtet ist, auf dem Anlagenbibliothekssystem in der öffentlichen Bibliotheksebene nach einem passenden Risiko und Datensatz zu suchen, wenn für die neue Situation kein klassifiziertes Risiko und damit Datensatz auf dem Anlagensicherheitssystem vorhanden ist,
wobei das Anlagenbibliothekssystem eingerichtet ist, einen neuen klassifizierten Datensatz zu übernehmen, der mittels einer Risikoanalyse durch Experten entstanden ist, wenn auf dem Anlagenbibliothekssystem kein entsprechend klassifizierter Datensatz vorhanden ist.

2. System (1) nach Anspruch 1, **dadurch gekennzeichnet, dass** die Sensoren (5) an den autonomen mobilen Robotern (AMR) und an den Anlagenteilen (3) angeordnet sind und die Sensoren (5) Sensordaten für das Anlagensicherheitssystem (PSCC) erzeugen.

3. System (1) nach mindestens einem der vorhergehenden Ansprüche, **dadurch gekennzeichnet, dass** das Anlagensicherheitssystem (PSCC) eine digitale Karte aufweist.

4. System (1) nach mindestens einem der vorhergehenden Ansprüche, eingerichtet, eine Positionsbestimmung aller Anlagenteile (3) und autonomen mobilen Roboter (AMR) durchzuführen.

5. System (1) nach Anspruch 3, **dadurch gekennzeichnet, dass** Abweichungen zwischen der digitalen Karte und einer erkannten realen Umgebungssituation von dem Anlagensicherheitssystem (PSCC) erkannt werden.

6. System (1) nach mindestens einem der vorhergehenden Ansprüche, **dadurch gekennzeichnet, dass** das Anlagensicherheitssystem (PSCC) ausgebildet ist, Risikominderungsmaßnahmen zyklisch oder nach Feststellung einer Änderung zu erfassen und zu überprüfen und ausgebildet ist, die Risikominderungsmaßnahmen zyklisch oder nach Feststellung einer Änderung anzupassen.

7. System (1) nach mindestens einem der vorhergehenden Ansprüche, **dadurch gekennzeichnet, dass** das Anlagensicherheitssystem (PSCC) und das Anlagenbibliotheksystem (SCES) jeweils als Expertensystem aufgebaut sind, welche dazu ausgebildet sind die die Datenbasis für neue Gefährdungen kontinuierlich zu erweitern und dazu ausgebildet sind neue Datensätze zu generieren.

## Claims

1. A system (1)
having at least one plant system (2) having at least a plurality of plant parts (3), having at least a plurality of autonomous mobile robots (AMRs), movable machines, and a plurality of sensors (5) for generating data for use in the safety related securing of the plant system (2),
wherein a local plant security system (PSCC) associated with the plant system (2) is present;
wherein data of the local plant safety system (PSCC) are stored in a first database (7);
wherein the local plant safety system (PSCC) has a first data model with datasets of the plant system (2);
wherein a decentral public plant library system (SCES) associated with the local plant safety system (PSCC) is present;
wherein the plant library system (SCES) is stored in a second database (10); wherein the plant library system (SCES) has at least one second data model having at least datasets for the plant safety system (PSCC);
wherein the plant safety system (PSCC) and the plant library system (SCES) are connected to one another via an interface (12), with data and datasets being transferable between the plant safety system (PSCC) and the plant library system (SCES) via the interface (12);
wherein the datasets respectively comprise at least a geometry, a hazard, a safety level, a position, a speed, an identification, and a measure,
wherein the plant safety system (PSCC) is configured to carry out a risk assessment and a risk evaluation for the plant system (2) cyclically or after determining a change and to make decisions on a necessity of a risk reduction cyclically or after determining a change, whereby the plant safety system (PSCC) is configured for an automatic and dynamic preparation of a risk evaluation of the plant system (2);
wherein the plant library system (SCES) is configured to read applicable standards and regulations and the plant library system (SCES) is configured to carry out the automatic and dynamic preparation of the risk evaluation on the basis of the applicable standards and/or regulations,
wherein the autonomous mobile robot is configured to react locally with collision avoidance in a first step as part of a risk reduction procedure;
wherein the plant safety system is configured to inform the autonomous mobile robots that are in the environment of the changes of the real situation in comparison with a digital twin of the change in a second step;
wherein the plant safety system is configured to check in a third step whether the changed situation is an already classified risk;
wherein the autonomous mobile robots are configured to update the corresponding datasets if the risk has already been classified;
wherein the plant safety system is configured to look for a suitable risk and dataset in the public library level on the plant library system if no classified risk and thus no dataset is present on the plant safety system for the new situation; and
wherein the plant library system is configured to take over a new classified dataset that has been created by experts by means of a risk analysis if no correspondingly classified dataset is present on the plant library system.

2. A system (1) in accordance with claim 1, **characterized in that** the sensors (5) are arranged at the autonomous mobile robots (AMRs) and at the plant parts (3) and the sensors (5) generate sensor data for the plant safety system (PSCC).

3. A system (1) in accordance with at least one of the preceding claims, **characterized in that** the plant safety system (PSCC) has a digital map.

4. A system (1) in accordance with at least one of the preceding claims configured to carry out a position determination of all the plant parts (3) and autonomous mobile robots (AMRs).

5. A system (1) in accordance with claim 3, **characterized in that** differences between the digital map and a recognized real environmental situation are recognized by the plant safety system (PSCC).

6. A system (1) in accordance with at least one of the preceding claims, **characterized in that** the plant safety system (PSCC) is configured to detect and to check risk reduction measures cyclically or after determining a change and is configured to adapt the risk reduction measures cyclically or after determining a change.

7. A system (1) in accordance with at least one of the preceding claims, **characterized in that** the plant safety system (PSCC) and the plant library system (SCES) are each set up as expert systems that are configured to continuously expand the database for new hazards and are configured to generate new datasets.

## Revendications

1. Système (1)
comprenant au moins un système d'installation (2) ayant au moins plusieurs parties d'installation (3), au moins plusieurs robots mobiles autonomes (AMR), des machines mobiles et plusieurs capteurs (5) de génération de données destinées à être utilisées pour la sécurisation orientée sécurité du système d'installation (2),
dans lequel
un système de sécurité d'installation local (PSCC) est présent en association avec le système d'installation (2),
les données du système de sécurité d'installation local (PSCC) sont stockées dans une première base de données (7),
le système de sécurité d'installation local (PSCC) présente un premier modèle de données avec des ensembles de données du système d'installation (2),
un système de bibliothèque d'installation public décentralisé (SCES) est présent en association avec le système de sécurité d'installation local (PSCC),
le système de bibliothèque d'installation (SCES) est stocké dans une deuxième base de données (10),
le système de bibliothèque d'installation (SCES) présente au moins un deuxième modèle de données avec au moins des ensembles de données pour le système de sécurité d'installation (PSCC),
le système de sécurité d'installation (PSCC) et le système de bibliothèque d'installation (SCES) sont reliés entre eux par une interface (12),
des données et des ensembles de données peuvent être transmis entre le système de sécurité d'installation (PSCC) et le système de bibliothèque d'installation (SCES) par l'intermédiaire de l'interface (12),
les ensembles de données incluent chacun au moins une géométrie, un danger, un niveau de sécurité, une position, une vitesse, une identification et une action,
le système de sécurité d'installation (PSCC) est conçu pour effectuer, de manière cyclique ou après avoir détecté un changement, une évaluation des risques et une appréciation des risques pour le système d'installation (2) et pour prendre, de manière cyclique ou après avoir détecté un changement, des décisions concernant la nécessité de minimiser les risques, moyennant quoi le système de sécurité d'installation (PSCC) est conçu pour établir automatiquement et dynamiquement une appréciation des risques du système d'installation (2),
le système de bibliothèque d'installation (SCES) est conçu pour lire les normes et/ou les prescriptions applicables, et le système de bibliothèque d'installation (SCES) est conçu pour effectuer l'établissement automatique et dynamique de l'évaluation des risques en se basant sur les normes et/ou des prescriptions applicables,
le robot mobile autonome est conçu pour, dans une première étape, réagir localement en évitant les collisions, dans le cadre d'une procédure de réduction des risques,
le système de sécurité d'installation est conçu pour, dans une deuxième étape, informer les robots mobiles autonomes du changement, robots qui se trouvent dans l'environnement des changements de la situation réelle par rapport à un jumeau numérique,
le système de sécurité d'installation est conçu pour vérifier, dans une troisième étape, si la situation changée est un risque déjà classifié,
les robots mobiles autonomes sont conçus pour mettre à jour les ensembles de données correspondants si le risque est déjà classifié,
le système de sécurité d'installation est conçu pour rechercher un risque et un ensemble de données appropriés sur le système de bibliothèque d'installation au niveau de la bibliothèque publique, si aucun risque classifié et donc aucun ensemble de données n'existe pour la nouvelle situation sur le système de sécurité d'installation,
le système de bibliothèque d'installation est conçu pour reprendre un nouvel ensemble de données classifié, qui a été créé au moyen d'une analyse de risque par des experts, si aucun ensemble de données classifié correspondant n'existe sur le système de bibliothèque d'installation.

2. Système (1) selon la revendication 1,
**caractérisé en ce que** les capteurs (5) sont disposés sur les robots mobiles autonomes (AMR) et sur les parties d'installation (3), et les capteurs (5) génèrent des données de capteurs pour le système de sécurité d'installation (PSCC).

3. Système (1) selon l'une au moins des revendications précédentes, **caractérisé en ce que** le système de sécurité d'installation (PSCC) comporte une carte numérique.

4. Système (1) selon l'une au moins des revendications précédentes, conçu pour effectuer une détermination de la position de toutes les parties d'installation (3) et de tous les robots mobiles autonomes (AMR).

5. Système (1) selon la revendication 3,
**caractérisé en ce que** des écarts entre la carte numérique et une situation environnementale réelle saisie sont détectés par le système de sécurité d'installation (PSCC).

6. Système (1) selon l'une au moins des revendications précédentes, **caractérisé en ce que** le système de sécurité d'installation (PSCC) est conçu pour enregistrer et vérifier les actions de réduction des risques, de manière cyclique ou après avoir détecté un changement, et est conçu pour adapter les actions de réduction des risques, de manière cyclique ou après avoir détecté un changement.

7. Système (1) selon l'une au moins des revendications précédentes, **caractérisé en ce que** le système de sécurité d'installation (PSCC) et le système de bibliothèque d'installation (SCES) sont réalisés sous forme de systèmes experts respectifs qui sont conçus pour élargir en continu la base de données concernant de nouveaux dangers et qui sont conçus pour générer de nouveaux ensembles de données.
